# FASCICULE DE BREVET EUROPEEN

(11) **EP 3 238 977 B1**
(45) Date de publication et mention de la délivrance du brevet: **14.06.2023**
(21) Numéro de dépôt: 17165168.0
(22) Date de dépôt: 06.04.2017
(51) Int. Cl.: B60L 53/30

(54) **ENSEMBLE D'ALIMENTATION DESTINE A LA RECHARGE DE BATTERIES ELECTRIQUES DE VEHICULES ELECTRIQUES**
STROMVERSORGUNGSEINHEIT ZUM WIEDERAUFLADEN VON ELEKTRISCHEN BATTERIEN VON ELEKTROFAHRZEUGEN
POWER SUPPLY ASSEMBLY INTENDED FOR RECHARGING ELECTRIC BATTERIES OF ELECTRIC VEHICLES

(30) Priorité: 25.04.2016 FR 1653634
(43) Date de publication de la demande: 01.11.2017
(73) Titulaire: Nexans, 92400 Courbevoie (FR)
(72) Inventeur: ANDRE, Patrick, 08270 Saulces-Monclin (FR)
(74) Mandataire: Ipsilon

(56) Documents cités:
- EP-A1- 2 792 536
- WO-A1-2010/114455
- WO-A1-2014/191644
- FR-A- 321 764
- GB-A- 2 483 064
- US-A- 4 165 592
- US-A- 6 081 205
- US-A1- 2012 229 085
- US-A1- 2015 111 423

## Description

L'invention concerne un ensemble d'alimentation destiné à la recharge de batteries électriques de véhicules électriques. Plus spécifiquement, cet ensemble permet de recharger des batteries électriques placées chacune dans un véhicule dans une position fonctionnelle, lesdits véhicules étant garés devant ledit système.

Un ensemble d'alimentation en électricité de batteries électriques de véhicules est par exemple décrit dans la demande de brevet WO 2014191644.

La demande GB2483064 décrit un ensemble d'alimentation destiné notamment à la recharge de batteries électriques de véhicules, ledit ensemble comprenant plusieurs piliers verticaux dans chacun desquels se rejoignent deux câbles électriques. Les deux câbles électriques sont placés dans deux conduits incurvés qui se rejoignent dans chacun des piliers dans un conduit vertical.

La demande US4165592 se rapporte à un ensemble d'alimentation destiné notamment à la recharge de batteries électriques de véhicules dont la caractéristique est de faire émerger des câbles qui s'étendent horizontalement sous le sol, au-dessus du sol dans une direction sensiblement verticale. Ces parties de câbles qui saillent verticalement du sol vont se connecter à un appareillage qui permettra de recharger les batteries électriques de véhicule.

Un tel ensemble comprend une pluralité de dispositifs de transmission d'électricité destinés à être posés sur le sol et disposant chacun d'un agencement conducteur et comportant au moins un poteau rigide supportant une borne d'alimentation dotée de connecteurs en cuivre. Un tel ensemble présente plusieurs inconvénients :
- il est cher à produire en raison de son procédé de fabrication. En effet, un tel ensemble doit contenir des barres orthogonales de cuivre, une première couche d'isolation en Kevlar, une deuxième couche d'isolation en PVC, et nécessite une pluralité de fixations de type vis/écrou.
- les barres solides de cuivre ont des longueurs constantes et ne peuvent donc pas s'adapter à n'importe quel type de parking,
- le profil actuel de ce type d'ensemble nécessite un procédé par moulage qui est très complexe,
- la connexion électrique entre deux dispositifs de transmission est compliquée, car elle nécessite une liaison de deux câbles pour chaque phase, qui est longue à réaliser.

Un ensemble d'alimentation selon l'invention permet de recharger des batteries de véhicule, tout en s'affranchissant des inconvénients relevés dans l'état de la technique.

L'invention a pour objet un ensemble d'alimentation destiné à la recharge de batteries électriques de véhicules électriques, selon la revendication 1.

La principale caractéristique d'un ensemble selon l'invention est que lesdits câbles sont souples et émergent des deux extrémités de la barre en étant repliés vers le haut, lesdites parties émergeantes repliées des câbles d'au moins l'une desdites extrémités étant destinées à être directement coiffées par une colonne verticale servant de borne d'alimentation à une batterie de véhicule. De cette manière, les poteaux rigides des ensembles d'alimentation existants ont été supprimés, pour ne laisser place qu'à des parties émergeantes de câbles repliées vers le haut. Il n'est donc plus nécessaire de réaliser un moulage de ces poteaux, qui implique un temps de fabrication assez long et donc des coûts supplémentaires. De même, la longueur des parties émergeantes repliées des câbles peut facilement être ajustée à une valeur donnée en sélectionnant la bonne longueur de câble, ce qui n'est pas le cas des poteaux existants, dont la hauteur est fixe. Le terme « replié vers le haut » signifie « vertical à 60° près ». La longueur des parties émergeante repliées des câbles au niveau d'une même extrémité de la barre, peut être identique pour tous les câbles, ou variable selon les configurations rencontrées. D'une façon générale, les parties repliées des câbles sont figées dans une position donnée correspondant à un angle d'inclinaison donné, qui peut être à tout moment modifiée au moyen d'une simple torsion manuelle réalisée sans effort particulier. Préférentiellement, chaque câble possède une double gaine externe isolante. La colonne est avantageusement réalisée en métal, et possède un câble électrique relié électriquement aux parties émergeantes repliées des câbles, situées dans ladite colonne. La colonne peut également être fabriquée en plastique. Puisque les barres sont destinées à être posées sur le sol, le terme « horizontal » signifie « horizontal à plus ou moins 10° près ». Le terme « directement » signifie que les parties émergeantes des câbles sont coiffées par une colonne sans l'insertion d'une quelconque pièce d'interface. La présence de câbles souples en lieu et place des poteaux rigides habituellement utilisés, octroie à l'ensemble d'alimentation selon l'invention un caractère de plus grande souplesse, dans la mesure où la longueur des câbles et donc de leurs parties émergeantes peut être ajustée à tout moment, pour notamment s'adapter à une configuration particulière et/ou à une contrainte inopinée. De plus, de telles ensembles sont plus légers et moins chers, car les poteaux rigides ont été supprimés.

Avantageusement, un ensemble d'alimentation selon l'invention comporte quatre câbles, dont un câble neutre et trois câbles de phase.

De façon préférentielle, les câbles sont alignés dans un plan horizontal au sein de chaque barre. De cette manière, les barres peuvent être conçues avec une faible épaisseur. Le plan d'alignement des câbles dans la barre est parallèle au plan de ladite barre.

De façon avantageuse, la barre est réalisée en résine et possède une tôle de protection et de mise à la terre enfouie dans ladite résine. Le terme « enfouie » signifie que la tôle n'est pas visible, sauf si la barre est transparente. Cette tôle constitue une protection vis-à-vis des câbles traversant la barre, contre des agressions externes, comme par exemple des coups de pioche.

Avantageusement, la tôle est plane et s'étend selon un axe longitudinal de la barre, ladite tôle présentant deux bords longitudinaux repliés et les câbles étant placés entre lesdits deux bords repliés.

Préférentiellement, la longueur de la partie émergeante des câbles au niveau d'une même extrémité de la barre est différente pour chaque câble. De cette manière, les câble traversant une même barre, possède chacun une partie émergeante de longueur différente.

De façon avantageuse, l'extrémité de la partie émergeante de chaque câble se termine par une patte conductrice plane et ajourée. De cette manière, chaque patte conductrice ajourée joue le rôle d'un connecteur électrique permettant à chaque câble d'être connectée à un autre élément conducteur, pouvant par exemple être un autre câble électrique. Le fait que chaque patte soit ajourée permet de fixer ladite patte à l'autre élément conducteur au moyen d'une vis. Préférentiellement, les pattes sont en métal. De façon avantageuse, le métal des pattes est le même que celui du câble auquel elles sont rattachées.

Avantageusement, chaque câble possède une double gaine externe isolante.

De façon préférentielle, un ensemble d'alimentation selon l'invention comprend au moins deux modules successifs de sorte que les deux barres horizontales desdits modules soient en continuité l'une de l'autre, les parties émergeantes des câbles des deux extrémités desdites barres les plus proches étant connectées électriquement, cette zone de connexion étant destinée à être coiffée par une colonne verticale servant de borne d'alimentation à une batterie de véhicule. Puisque les parties émergeantes des câbles sont repliées vers le haut, la connexion électrique entre les câbles des deux barres s'effectue au-dessus desdites barres. Avantageusement, les deux barres sont parfaitement alignées le long du même axe. Il est également possible que les deux barres soient légèrement inclinées l'une par rapport à l'autre, d'un angle maximal de 15°.

Préférentiellement, une partie émergeante d'un câble d'une barre est connectée à la partie émergeante du câble de l'autre barre lui faisant face. Ainsi, les câbles ne subissent aucune déformation ou torsion pour venir se connecter à l'autre câble, permettant de réaliser une connexion électrique sans contrainte, et donc sans risque d'être défaite sous le moindre effort.

De façon avantageuse, chaque câble peut être librement déplacé en translation dans une barre horizontale, de manière à pouvoir faire varier la longueur de sa partie émergeante. En effet, les câbles sont placés dans des rainures ou gorges longitudinales d'une barre, si bien qu'ils peuvent être déplacés aisément le long desdites rainures et/ou gorges pour obtenir des parties émergeantes de câbles de longueur souhaitée.

Un ensemble d'alimentation selon l'invention présente l'avantage d'être modulable, dans la mesure où la longueur des parties émergeantes repliées des câbles est variable, et peut donc s'adapter à une multiplicité de bornes d'alimentation pour alimenter en courant des batteries électriques de tout type de véhicule. Il a de plus l'avantage d'être facile et rapide à fabriquer, puisqu'il ne nécessite pas l'élaboration de poteaux rigides verticaux, qui engendre un temps de fabrication supplémentaire et donc des coûts supplém entaires.

On donne, ci-après, une description détaillée d'un mode de réalisation préféré d'un ensemble d'alimentation selon l'invention, en se référant aux figures suivantes :
- La figure 1 est une vue en perspective d'un ensemble selon l'invention montrant des bornes d'alimentation,
- La figue 2A est une vue simplifiée de coté d'un module de transmission d'électricité d'un ensemble d'alimentation selon l'invention,
- La figure 2B est une vue du dessus du module de la figure 2A,
- La figure 3 est une vue en perspective agrandie d'une extrémité d'un module de transmission d'électricité d'un ensemble d'alimentation selon l'invention,
- La figure 4 est une vue en coupe transversale d'une barre d'un module de transmission d'électricité d'un ensemble d'alimentation selon l'invention,
- La figure 5 est une vue en perspective d'une connexion électrique entre deux modules de transmission d'électricité d'un ensemble d'alimentation selon l'invention.

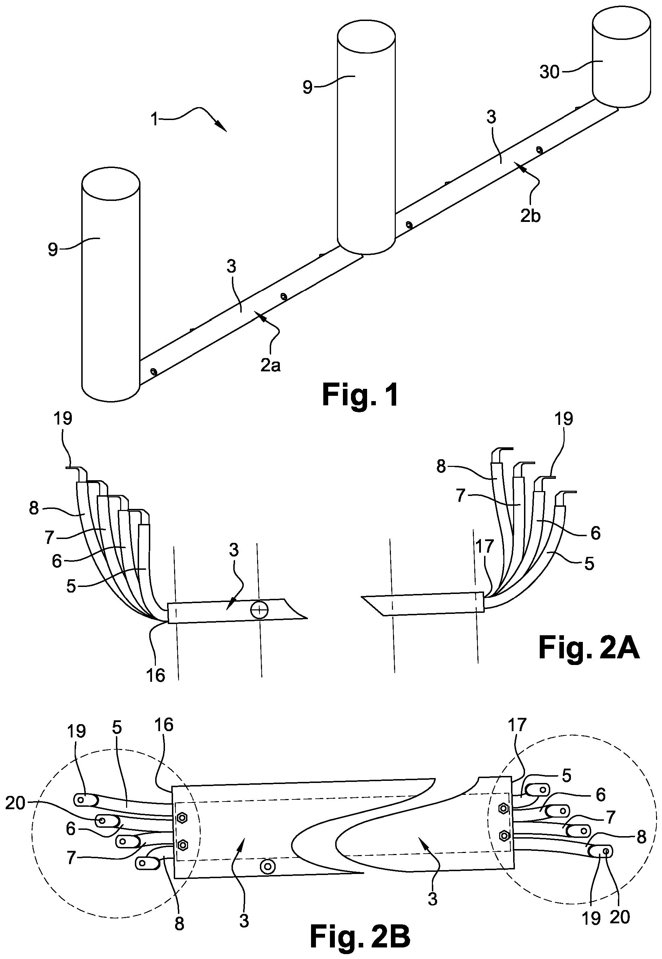

En se référant à la figure 1, un ensemble 1 d'alimentation destiné à la recharge de batteries électriques de véhicules électriques, comprend au moins deux modules 2a, 2b de transmission de courant d'électricité comportant chacun une barre horizontale 3 constituée d'un matériau isolant électrique comme par exemple une résine, ladite barre 3 étant allongée et traversée longitudinalement par quatre câbles électriques 5, 6, 7, 8. Parmi ces quatre câbles électriques, se trouvent un câble neutre et trois câbles de phases. Les câbles 5, 6, 7, 8 de l'un 2b des deux modules relient un poteau 30 de départ et d'arrivée de courant du réseau électrique, à une colonne 9 verticale servant de borne d'alimentation à une batterie de véhicule. Les câbles 5, 6, 7, 8 de l'autre 2a module reliant deux colonnes verticales 9 servant de borne d'alimentation.

Les deux modules 2a, 2b sont connectés électriquement au niveau de l'une desdites colonnes verticales 9. Chaque colonne 9 est préférentiellement réalisée en métal ou en plastique solide.

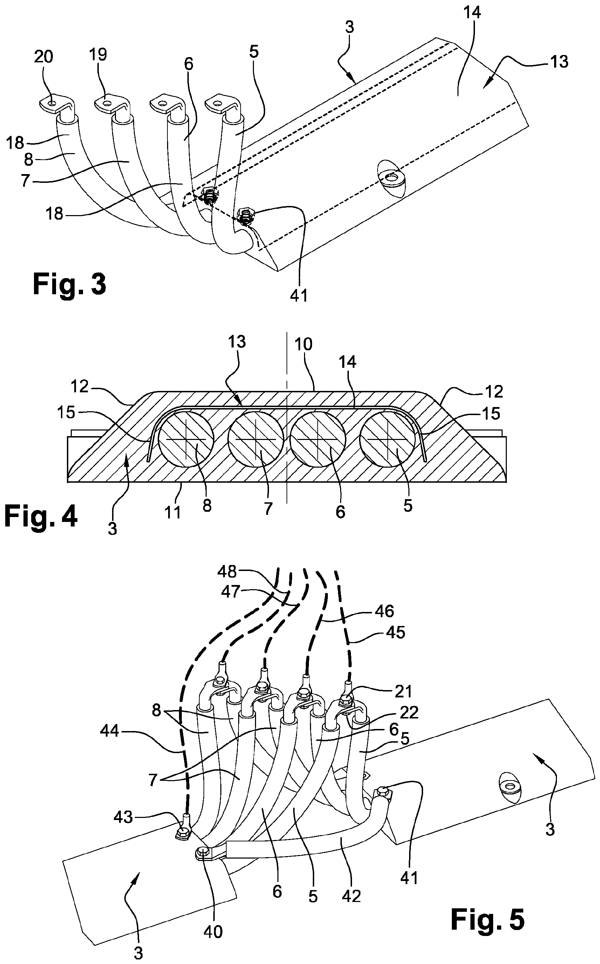

En se référant aux figures 3 et 4, dans un ensemble d'alimentation 1 selon l'invention, chaque barre 3 est pleine, plane et de faible épaisseur, et est réalisée dans un matériau isolant tel que par exemple de la résine. Plus précisément, chaque barre 3 comprend une face supérieure 10 horizontale et une face inférieure 11 horizontale, la largeur de ladite face supérieure 10 étant inférieure à la largeur de ladite face inférieure 11. Lesdites deux faces 10, 11 sont superposées en étant centrées l'une sur l'autre, si bien que l'axe de symétrie longitudinal de la face supérieure 10 et l'axe de symétrie longitudinal de la face inférieure 11 sont au droit l'un de l'autre, et s'inscrivent dans le même plan vertical. La face supérieure 10 et la face inférieure 11 sont reliées l'une à l'autre au moyen de deux bords latéraux 12 inclinés. Le fait que les bords latéraux 12 de la barre 3 soient inclinés, permet d'éviter à la barre 3 de constituer une butée susceptible de faire trébucher un piéton. De plus, un véhicule peut rouler en douceur sur la barre 3 si le besoin s'en faisait sentir. La face supérieure 10 de la barre 3 est revêtue d'un matériau rugueux, pour éviter les chutes de piéton et éviter le gel de l'eau stagnante. Chaque barre 3 comprend une tôle 13 qui s'étend sur quasiment toute la longueur de ladite barre 3, c'est-à-dire sur une longueur supérieure à 95% de la longueur totale de ladite barre 3. La tôle 13 comporte un corps principal 14 plan et de faible épaisseur, délimité latéralement par deux bords longitudinaux repliés 15, faisant un angle compris entre 70° et 90° avec ledit corps 14. Lesdits deux bords 15 ont la même épaisseur que celle du corps principal 14. En d'autres termes, la tôle 13 possède une section transversale en forme de U. Le corps principal 14 de la tôle 13 s'étend parallèlement à la face supérieure 10 et à la face inférieure 11 de la barre 3 et est situé plus proche de ladite face supérieure 10 que de ladite face inférieure 11. Les deux bords latéraux 15 de la tôle s'étendent vers la face inférieure 11 de la barre 3. Dans l'espace délimité par le corps principal 14 de la tôle 13 et les deux bords latéraux 15 de ladite tôle 13 sont placés les quatre câbles 5, 6, 7, 8. Plus précisément, lesdits quatre câbles 5, 6, 7, 8 sont alignés dans un plan qui est parallèle au plan du corps principal 14 de la tôle 13, et qui est parallèle aux plans des faces supérieure et inférieure 10, 11 de la barre 3. Chaque barre 3 est supposée reposer sur le sol. La tôle 13 permet, d'une part de relier chaque colonne 9 ou poteau 30 à un câble ou piquet de terre situé en amont du système, et d'autre part, de protéger lesdits câbles 5, 6, 7, 8 de toute agression extérieure, comme par exemple des coups de pioche. De cette manière, la tôle 13 remplace avantageusement un câble de terre.

En se référant à la figure 2A, les quatre câbles 5, 6, 7, 8 émergent des deux extrémités 16, 17 de chaque barre 3, considérées selon son axe longitudinal. Les parties émergeantes des câbles 5, 6, 7, 8 qui sont situées à une même extrémité d'une barre 3, ont la même longueur. Chacun desdits quatre câbles 5, 6, 7, 8 possède une double gaine extérieure 18 isolante. Les zones d'extrémités des quatre câbles 5, 6, 7, 8 sont repliés vers le haut de manière à faire un angle compris entre 30° et 90° avec la barre 3 dans laquelle ils sont implantés, ladite barre 3 étant supposée reposer sur le sol dans un plan horizontal.

En se référant aux figures 2B et 3, les parties émergeantes des quatre câbles 5, 6, 7, 8 se terminent chacune par une patte métallique 19 plane, réalisée dans le même métal que celui du conducteur du câble 5, 6, 7, 8 auquel elle est rattachée. Chacune desdites pattes 19 possède une ouverture 20 pour le passage d'une vis de fixation.

Les deux modules 2a, 2b d'un ensemble 1 d'alimentation selon l'invention sont alignés et à proximité l'un de l'autre. Autrement dit, les deux barres 3 des deux modules 2a, 2b sont parfaitement alignées et dans le prolongement l'une de l'autre. Elles ne sont séparées que par quelques centimètres.

En se référant à la figure 5, les parties émergeantes des câbles 5, 6, 7, 8 des deux extrémités desdites barres 3 les plus proches, sont connectées électriquement entre elles au niveau de l'une des deux colonnes 9 servant de borne d'alimentation. Plus précisément, la partie émergeante d'un câble d'une extrémité d'une barre 3 vient se connecter à la partie émergeante du câble de l'extrémité de l'autre barre 3 lui faisant face. Pour ce faire, les deux pattes 19 de deux câbles 5, 6, 7, 9 à connecter entre eux, sont superposées de manière à faire correspondre leurs ouvertures 20. Une vis de fixation 21 est alors introduite dans les deux ouvertures 20 superposées, et un écrou 22 vient coopérer avec ladite vis 21 pour solidariser les deux pattes 19 entre elles. Quatre ponts de connexion sont ainsi réalisés entre les deux barres 3. Un câble d'alimentation 45, 46, 47, 48 vient se connecter électriquement au niveau de chacun desdits ponts pour alimenter une colonne 3 servant de borne d'alimentation. Chacune des deux barres 3 dispose d'un écrou 40, 41 pour permettre la fixation d'un câble 42 de connexion entre lesdites deux barres 3. Plus précisément, chaque écrou 40, 41 est fixé à la tôle 13 de chaque barre 3, et le câble de connexion 42 permet ainsi de relier électriquement les deux barres 3 entre elles. Chaque barre 3 dispose d'un autre écrou 43 pour permettre la fixation d'un câble d'alimentation 44 de la colonne 9. Plus précisément cet autre écrou 43 est fixé à la tôle 13 de la barre 3 et le câble d'alimentation 44 permet de relier électriquement la colonne 9 à ladite tôle 13. Trois colonnes 9 servant chacune de borne d'alimentation pour recharger les batteries des véhicules, sont implantées sur les deux barres 3 alignées des deux modules 2a, 2b. Plus précisément, deux colonnes 9 sont implantées au niveau des deux extrémités les plus éloignées desdites barres 3, coiffant ainsi les quatre parties émergeantes des câbles 5, 6, 7, 8. Une troisième colonne 9 est implantée au niveau des deux extrémités les plus proches desdites barres 3, coiffant ainsi les quatre ponts de connexion entre lesdites barres 3.

## Revendications

1. Ensemble d'alimentation (1) destiné à la recharge de batteries électriques de véhicules électriques, comprenant au moins un module (2a, 2b) de transmission d'électricité comportant chacun une barre horizontale (3) constituée d'un matériau isolant électrique, ladite barre (3) étant allongée et traversée longitudinalement par des câbles électriques (5, 6, 7, 8), lesdits câbles (5, 6, 7, 8) étant souples et émergeants des deux extrémités (16, 17) de la barre (3) en étant repliés vers le haut, et lesdites parties émergeantes repliées des câbles (5, 6, 7, 8) d'au moins l'une desdites extrémités (16, 17) étant directement coiffées par une colonne verticale (9) servant de borne d'alimentation à une batterie de véhicule, **caractérisé en ce que** les parties repliées des câbles sont figées dans une position donnée sans l'utilisation de poteaux rigides, ladite position donnée correspondant à un angle d'inclinaison donné, qui peut être à tout moment modifiée au moyen d'une simple torsion manuelle réalisée sans effort particulier.

2. Ensemble d'alimentation selon la revendication 1, **caractérisé en ce qu'**il comporte quatre câbles (5, 6, 7, 8), dont un câble neutre et trois câbles de phase.

3. Ensemble d'alimentation selon l'une quelconque des revendications 1 ou 2, **caractérisé en ce que** les câbles (5, 6, 7, 8) sont alignés dans un plan horizontal au sein de la barre (3).

4. Ensemble d'alimentation selon l'une quelconque des revendications 1 à 3, **caractérisé en ce que** la barre (3) est réalisée en résine et possède une tôle (13) de protection et de mise à la terre enfouie dans ladite résine.

5. Ensemble d'alimentation selon la revendication 4, **caractérisé en ce que** la tôle (13) est plane et s'étend selon un axe longitudinal de la barre (3), et **en ce que** ladite tôle (13) présente deux bords longitudinaux (15) repliés et les câbles (5, 6, 7, 8) sont placés entre lesdits deux bords repliés (15).

6. Ensemble d'alimentation selon l'une quelconque des revendications 1 à 5, **caractérisé en ce que** la longueur de la partie émergeante des câbles (5, 6, 7, 8) au niveau d'une même extrémité (16, 17) de la barre (3) est identique pour chaque câble (5, 6, 7, 8).

7. Ensemble d'alimentation selon l'une quelconque des revendications 1 à 6, **caractérisé en ce que** l'extrémité de la partie émergeante de chaque câble (5, 6, 7, 8) se termine par une patte (19) conductrice plane et ajourée.

8. Ensemble d'alimentation selon l'une quelconque des revendications 1 à 5, **caractérisé en ce que** chaque câble (5, 6, 7, 8) possède une double gaine externe isolante (18).

9. Ensemble d'alimentation selon l'une quelconque des revendications 1 à 8, **caractérisé en ce qu'**il comprend au moins deux modules successifs (2a, 2b) de sorte que les deux barres (3) horizontales desdits modules (2a, 2b) soient en continuité l'une de l'autre, et ce que les parties émergeantes des câbles (5, 6, 8, 9) des deux extrémités (16, 17) desdites barres (3) les plus proches sont connectées électriquement entre elles, cette zone de connexion étant destinée à être coiffée par une colonne verticale (9) servant de borne d'alimentation à une batterie de véhicule.

10. Ensemble d'alimentation selon la revendication 9, **caractérisé en ce qu'**une partie émergeante d'un câble (5, 6, 7, 8) d'une barre (3) est connectée à la partie émergeante du câble (5, 6, 7, 8) de l'autre barre (3) lui faisant face.

11. Ensemble d'alimentation selon l'une quelconque des revendications 1 à 10, **caractérisé en ce que** chaque câble (5, 6, 7, 8) peut être librement déplacé en translation dans une barre horizontale (3) de manière à pouvoir faire varier la longueur de sa partie émergeante

## Patentansprüche

1. Stromversorgungseinheit (1) zum Wiederaufladen von elektrischen Batterien von Elektrofahrzeugen, umfassend mindestens ein Modul (2a, 2b) zur Übertragung von Elektrizität, umfassend jeweils eine horizontale Stange (3), die aus einem elektrisch isolierenden Material besteht, wobei die Stange (3) verlängert ist und in der Längsrichtung von elektrischen Kabeln (5, 6, 7, 8) gequert wird, wobei die Kabel (5, 6, 7, 8) flexibel sind und aus den zwei Enden (16, 17) der Stange (3) austreten, indem sie nach oben umgeknickt sind, und wobei die umgeknickten austretenden Teile der Kabel (5, 6, 7, 8) mindestens eines der Enden (16, 17) direkt von einer vertikalen Säule (9), die als Versorgungsklemme dient, auf eine Fahrzeugbatterie aufgesetzt sind, **dadurch gekennzeichnet, dass** die umgeknickten Teile der Kabel in einer gegebenen Position ohne die Verwendung von starren Pfosten festgehalten sind, wobei die gegebene Position einem gegebenen Neigungswinkel entspricht, der jederzeit mit Hilfe einer einfachen manuellen Drehung, ausgeführt ohne besondere Kraft, modifiziert werden kann.

2. Stromversorgungseinheit nach Anspruch 1, **dadurch gekennzeichnet, dass** sie vier Kabel (5, 6, 7, 8) umfasst, davon ein neutrales Kabel und drei Phasenkabel.

3. Stromversorgungseinheit nach einem der Ansprüche 1 oder 2, **dadurch gekennzeichnet, dass** die Kabel (5, 6, 7, 8) in einer horizontalen Ebene innerhalb der Stange (3) ausgefluchtet sind.

4. Stromversorgungseinheit nach einem der Ansprüche 1 bis 3, **dadurch gekennzeichnet, dass** die Stange (3) aus Harz hergestellt ist und ein Blech (13) zum Schutz und zur Erdung, das im Harz verborgen ist, aufweist.

5. Stromversorgungseinheit nach Anspruch 4, **dadurch gekennzeichnet, dass** das Blech (13) eben ist und sich gemäß einer Längsachse der Stange (3) erstreckt, und dadurch, dass das Blech (13) zwei längs gerichtete umgeknickte Ränder (15) aufweist und die Kabel (5, 6, 7, 8) zwischen den umgebogenen Rändern (15) platziert sind.

6. Stromversorgungseinheit nach einem der Ansprüche 1 bis 5, **dadurch gekennzeichnet, dass** die Länge des austretenden Teils der Kabel (5, 6, 7, 8) auf der Ebene eines gleichen Endes (16, 17) der Stange (3) bei jedem Kabel (5, 6, 7, 8) identisch ist.

7. Stromversorgungseinheit nach einem der Ansprüche 1 bis 6, **dadurch gekennzeichnet, dass** das Ende des austretenden Teils jedes Kabels (5, 6, 7, 8) mit einem ebenen und durchbrochenen leitenden Fuß (19) endet.

8. Stromversorgungseinheit nach einem der Ansprüche 1 bis 5, **dadurch gekennzeichnet, dass** jedes Kabel (5, 6, 7, 8) eine doppelte isolierende äußere Hülle (18) aufweist.

9. Stromversorgungseinheit nach einem der Ansprüche 1 bis 8, **dadurch gekennzeichnet, dass** sie mindestens zwei aufeinanderfolgende Module (2a, 2b) umfasst, so dass die zwei horizontalen Stangen (3) der Module (2a, 2b) aufeinander folgen, und dadurch, dass die austretenden Teile der Kabel (5, 6, 7, 8) der zwei Enden (16, 17) der nächsten Stangen (3) elektrisch miteinander verbunden sind, wobei dieser Verbindungsbereich ausgelegt ist, um von einer vertikalen Säule (9), die als Versorgungsklemme dient, auf eine Fahrzeugbatterie aufgesetzt zu sein.

10. Stromversorgungseinheit nach Anspruch 9, **dadurch gekennzeichnet, dass** ein austretender Teil eines Kabels (5, 6, 7, 8) einer Stange (3) mit dem austretenden Teil des Kabels (5, 6, 7, 8) der anderen Stange (3) verbunden ist und ihm gegenüber liegt.

11. Stromversorgungseinheit nach einem der Ansprüche 1 bis 10, **dadurch gekennzeichnet, dass** jedes Kabel (5, 6, 7, 8) frei in Translation in einer horizontalen Stange (3) verschoben werden kann, um die Länge des austretenden Teils variieren lassen zu können.

## Claims

1. A power supply assembly (1) intended to recharge electric batteries, comprising at least one electricity transmission module (2a, 2b) each including a horizontal bar (3) made up of an electrically insulating material, said bar (3) being elongate and passed through longitudinally by electrical cables (5, 6, 7, 8), said cables (5, 6, 7, 8) being flexible and emerging from two ends (16, 17) of the bar (3) while being folded upward, and said folded emerging portions of the cables (5, 6, 7, 8) of at least one of said ends (16, 17) being directly capped by a vertical column (9) serving as power supply terminal for a vehicle battery, **characterized in that** the folded portions of the cables are fixed in a given position without the use of rigid posts, said given position corresponding to a given incline angle, which may be modified at any moment through simple manual torsion without any special effort.

2. The power supply assembly according to claim 1, **characterized in that** it includes four cables (5, 6, 7, 8), including a neutral cable and three phase cables.

3. The power supply assembly according to any one of claims 1 or 2, **characterized in that** the cables (5, 6, 7, 8) are aligned in a horizontal plane within the bar (3).

4. The power supply assembly according to any one of claims 1 to 3, **characterized in that** the bar (3) is made from resin and has a metal sheet (13) for protection and grounding buried in the resin.

5. The power supply assembly according to claim 4, **characterized in that** the metal sheet (13) is flat and extends along a longitudinal axis of the bar (3), and **in that** said metal sheet (13) has two folded longitudinal edges (15) and the cables (5, 6, 7, 8) are placed between said two folded edges (15).

6. The power supply assembly according to any one of claims 1 to 5, **characterized in that** the length of the emerging portion of the cables (5, 6, 7, 8) at a same end (16, 17) of the bar (3) is identical for each cable (5, 6, 7, 8).

7. The power supply assembly according to any one of claims 1 to 6, **characterized in that** the emerging portion of each cable (5, 6, 7, 8) ends with a flat and perforated conductive tab (19).

8. The power supply assembly according to any one of claims 1 to 5, **characterized in that** each cable (5, 6, 7, 8) has a double insulating outer sheath (18).

9. The power supply assembly according to any one of claims 1 to 8, **characterized in that** it comprises at least two successive modules (2a, 2b) such that the two horizontal bars (3) of said modules (2a, 2b) are in continuity with one another, and **in that** the emerging portions of the cables (5, 6, 8, 9) of the two ends (16, 17) of said closest bars (3) are electrically connected to one another, this connection zone being intended to be capped by a vertical column (9) serving as power supply terminal for a vehicle battery.

10. The power supply assembly according to claim 9, **characterized in that** an emerging portion of a cable (5, 6, 7, 8) of a bar (3) is connected to the emerging portion of the cable (5, 6, 7, 8) of the other bar (3) facing it.

11. The power supply assembly according to any one of claims 1 to 10, **characterized in that** each cable (5, 6, 7, 8) can be freely moved in translation in a horizontal bar (3) so as to be able to vary the length of its emerging portion.
